# EUROPÄISCHE PATENTSCHRIFT

(11) **EP 3 277 554 B1**
(45) Veröffentlichungstag und Bekanntmachung des Hinweises auf die Patenterteilung: **14.10.2020**
(21) Anmeldenummer: 16711112.9
(22) Anmeldetag: 29.02.2016
(51) Int. Cl.: B61B 12/00, F16F 9/58

(54) **ENERGIESPEICHER FÜR SESSEL EINES SESSELLIFTS**
ENERGY ACCUMULATOR FOR CHAIRS OF A CHAIRLIFT
ACCUMULATEUR D'ÉNERGIE POUR SIÈGE DE TÉLÉSIÈGE

(30) Priorität: 02.04.2015 AT 2022015
(43) Veröffentlichungstag der Anmeldung: 07.02.2018
(73) Patentinhaber: Innova Patent GmbH, 6922 Wolfurt (AT)
(72) Erfinder: SUTTERLÜTY, Andreas, 6863 Egg (AT); FISCHNALLER, Dieter, 6714 Nüziders (AT)
(74) Vertreter: Beer & Partner Patentanwälte KG
(86) Internationale Anmeldenummer: PCT/AT2016/000018
(87) Internationale Veröffentlichungsnummer: WO 2016/154642

(56) Entgegenhaltungen:
- EP-A1- 0 242 242
- EP-A1- 2 810 841
- EP-A2- 1 151 903
- EP-A2- 2 030 858
- CN-U- 202 991 998
- DE-A1- 2 131 456

## Beschreibung

Die vorliegende Erfindung betrifft eine Vorrichtung eines Sessels für einen Sessellift, der eine verschwenkbare Schutzeinrichtung, wie einen Sicherheitsbügel oder eine Wetterschutzhaube aufweist, wobei die Vorrichtung einen Energiespeicher, der zwischen der Schutzeinrichtung und einem Rahmen des Sessels anordenbar ist, aufweist.

Eine gattungsgemäße Vorrichtung mit einem Energiespeicher, beispielsweise in Form einer Gasdruckfeder, ist aus der EP 2 030 858 A2 bekannt. Bei dieser wird der Energiespeicher beim Öffnen eines Sicherheitsbügels gespannt und Energie gespeichert und beim Schließen des Sicherheitsbügels durch ein Entspannen des Energiespeichers wieder Energie abgegeben.

Um Fahrgäste sicher und gegebenenfalls geschützt vor Wind und Wetter transportieren zu können, weisen Sessel von Sesselliften Schutzeinrichtungen, z.B. Sicherheitsbügel und Wetterschutzhauben, auf. Aufgrund der großen Oberfläche und der hohen angreifenden Kräfte bei starkem Wind sind Wetterschutzhauben dementsprechend dimensioniert und schwer. Problematisch bei derartigen Schutzeinrichtungen ist, dass insbesondere bei Wetterschutzhauben, zum Teil aber auch bei Sicherheitsbügeln, zum Öffnen oder Schließen eine große Kraft aufgebracht werden muss, was gerade für schwächere Fahrgäste, insbesondere für Kinder und kleinere Personen, ein Problem darstellen kann.

Um das Öffnen und Schließen der Schutzeinrichtungen für Fahrgäste zu erleichtern, können beispielsweise Drehfedern oder auch Schraubenfedern zwischen dem Rahmen des Sessels und der Schutzeinrichtung angeordnet sein. Andere Formen von Federn, z.B. Gasdruckfedern, sind für diesen Zweck ebenfalls bekannt. Diese sehr einfachen Konstruktionen erlauben es jedoch nicht, beliebige Kraft- bzw. Momentenverläufe zu realisieren, da sie über den gesamten Weg eine im Wesentlichen kontinuierlich ansteigende bzw. abfallende Gegenkraft zur Gewichtskraft der Sicherheitseinrichtung erzeugen. In Kombination mit dem Schwerpunktverlauf der Schutzeinrichtung ergibt sich somit unter Berücksichtigung der für den Betrieb erforderlichen Einstellungen ein entsprechender Verlauf der Handkraft, um die Schutzeinrichtung zu öffnen oder zu schließen.

Aufgabe der vorliegenden Erfindung ist es, eine Vorrichtung an Sesseln zu schaffen, mit der die Kraft zum Öffnen oder Schließen der Sicherheitseinrichtung besser einstellbar ist.

Gelöst wird diese Aufgabe mit einer Vorrichtung der eingangs genannten Art dadurch, dass der Energiespeicher beim Schließen der Schutzeinrichtung erst im Bereich ihrer Endstellung von einem Druckstück spannbar ist, das zwischen einer ersten Stellung, in der es von einer Gegenfläche entfernt und der Energiespeicher entspannt ist, und einer zweiten Stellung, in der es an der Gegenfläche anliegt und der Energiespeicher gespannt ist, verschiebbar ist.

Wird die Schutzeinrichtung durch einen Fahrgast geschlossen, so wird der Energiespeicher, z.B. eine Schraubenfeder, erst dann gespannt, wenn sich die Sicherheitseinrichtung im Bereich ihrer Endstellung befindet. Im geschlossenen Zustand wird der Energiespeicher über die Gewichtskraft der Schutzeinrichtung gespannt gehalten. Die gespeicherte Kraft kann dann dazu verwendet werden, um am Beginn beim Öffnen oder Schließen der Schutzeinrichtung weniger Kraft aufwenden zu müssen bzw. werden Haftkräfte und Trägheitskräfte am Bewegungsbeginn leichter überwunden.

Die erfindungsgemäße Vorrichtung wird bevorzugt in Verbindung mit einem Dämpfer mit einer Kolbenstange und einem Zylinder verwendet, welche häufig bei Sesseln von Sesselliften Verwendung finden.

Das elastische Element kann dann beispielsweise an der Kolbenstange montiert sein und gespannt werden, wenn es gegen eine Stirnfläche des Zylinders oder einen am Zylinder befestigten Teil gedrückt wird. Eine mechanische Umkehr der Funktion der einzelnen Bauteile der Vorrichtung ist erfindungsgemäß ebenfalls möglich. In diesem Fall wäre beispielsweise das elastische Element am Zylinder angeordnet und würde durch die Kolbenstange oder einen daran befestigten Teil gespannt.

In einer bevorzugten Ausführungsform der Erfindung ist das elastische Element in einem Gehäuse angeordnet. Im Gehäuse ist zwischen dem elastischen Element und einem nach innen ragenden Flansch des Gehäuses wenigstens ein Abschnitt eines Druckstücks aufgenommen, das entlang einer Längsachse der Kolbenstange verschiebbar ist.

Am Gehäuse kann ein Einstellelement angeordnet sein, wobei das elastische Element zwischen dem Druckstück und dem Einstellelement eingespannt ist. Durch das Einstellelement kann die Vorspannkraft des elastischen Elements eingestellt werden.

Soll die Position des Gehäuses mit dem elastischen Element an der Kolbenstange verschoben werden, ohne die Vorspannung des Energiespeichers zu ändern, beispielsweise, um den Punkt, ab dem bzw. bis zu dem das elastische Element wirksam wird, einstellen zu können, kann das Gehäuse in einer bevorzugten Ausführungsform der Erfindung entlang der Längsachse der Kolbenstange verstellbar und fixierbar sein.

Bevorzugt kann die erfindungsgemäße Vorrichtung dann dadurch weitergebildet sein, dass das Einstellelement eine Öffnung für die Kolbenstange aufweist und dass die Öffnung des Einstellelements ein Gewinde aufweist und mit einem Gewinde an der Kolbenstange verschraubt ist. Um die Vorrichtung in einer gewünschten Position zu fixieren, kann das Einstellelement mit einer Kontermutter verspannt sein.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung bevorzugter Ausführungsbeispiele der Erfindung unter Bezugnahme auf die angeschlossenen Zeichnungen. Es zeigt:
- Fig. 1: einen Schnitt durch eine Ausführungsform der Vorrichtung mit entspanntem Energiespeicher,
- Fig. 2: eine Ansicht der erfindungsgemäßen Vorrichtung im gespannten Zustand des Energiespeichers und
- Fig. 3: die erfindungsgemäße Vorrichtung im zwischen einer Wetterschutzhaube und dem Rahmen eines Sesselliftes eingebauten Zustand.

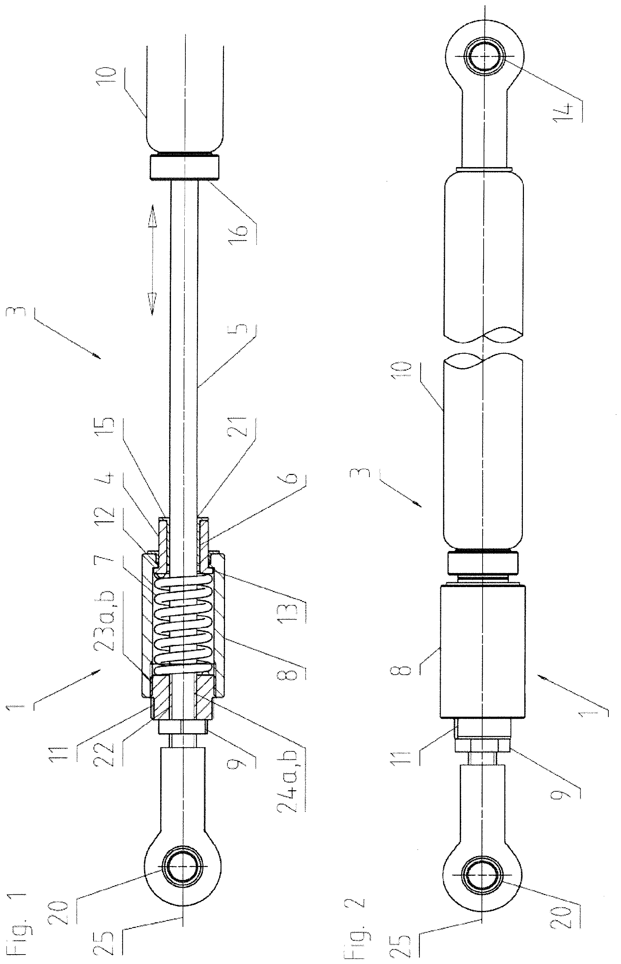

Die Figuren 1 bis 3 zeigen eine erfindungsgemäße Vorrichtung zum Erleichtern des Öffnens und/oder Schließens einer Schutzeinrichtung eines Sessels für einen Sessellift 2, wobei die Schutzeinrichtung im dargestellten Ausführungsbeispiel eine Wetterschutzhaube 19 ist. Zusätzlich oder alternativ könnte eine entsprechende erfindungsgemäße Vorrichtung auch für einen Sicherheitsbügel 18 verwendet werden.

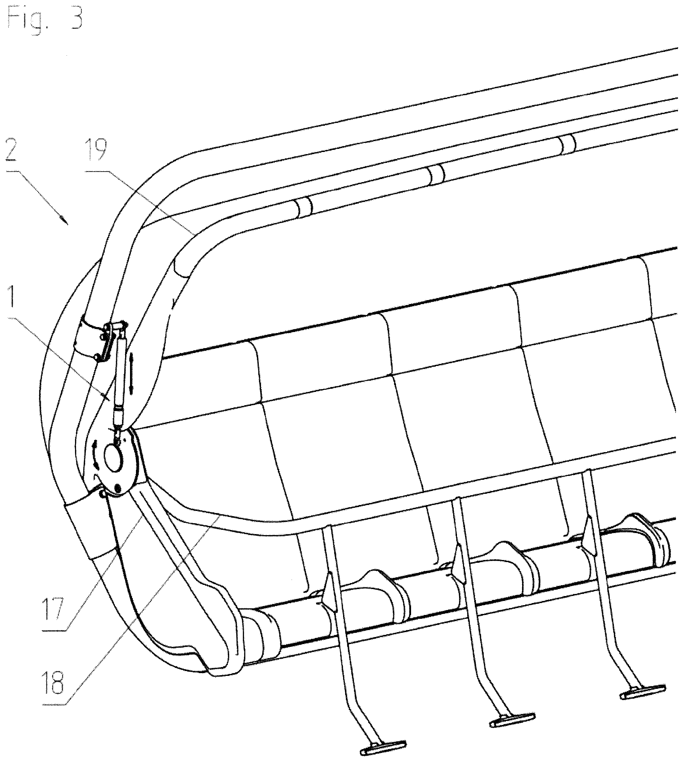

Die Vorrichtung 1 ist bevorzugt im Bereich des freien Endes einer Kolbenstange 5 eines Dämpfers 3 angeordnet. In der Fig. 3 ist die Vorrichtung 1 im zwischen der Schutzeinrichtung 19 und dem Rahmen 17 des Sesselliftes eingebauten Zustand dargestellt. Der Dämpfer 3 ist beispielsweise über schwenkbare Verbindungselemente 14 und 20 mit dem Rahmen 17 und der Schutzeinrichtung verbunden und weist eine Kolbenstange 5 und einen Zylinder 10 auf.

Ein Energiespeicher 7, im dargestellten Ausführungsbeispiel eine Schraubenfeder, ist in einem Gehäuse 8 angeordnet und zwischen einem Einstellelement 11 und einem Druckstück 4 vorgespannt. Das Gehäuse 8 weist an einem Ende einen nach innen ragenden Flansch 12 auf. Das Druckstück 4 ist im Gehäuse gegen die Kraft des Energiespeichers 7 verschiebbar und wird in seiner Bewegung in die andere Richtung durch den Flansch 12 dadurch begrenzt, dass ein Gegenflansch 13 des Druckstücks 4 am Flansch 12 anliegt. Der Innendurchmesser des nach innen ragenden Flansches 12 ist kleiner als der Außendurchmesser des Gegenflansches 13 am Druckstück 4. Der Flansch 12 ist vorzugsweise mit dem Gehäuse 8 einstückig ausgeführt, kann aber auch ein mit dem Gehäuse 8 verbundener Teil sein.

Auf der gegenüberliegenden Seite des innenliegenden Flansches 12 ist das Einstellelement 11 am Gehäuses 8 befestigt. Das Einstellelement 11 weist in der dargestellten Ausführungsform ein Außengewinde 23a auf und ist mit einem Innengewinde 23b im Gehäuse 8 verschraubt. Durch das Ausmaß, in dem das Einstellelement 11 in das Gehäuse 8 eingeschraubt wird, ist die Vorspannkraft des Energiespeichers 7 einstellbar.

Das Einstellelement 11 weist weiters ein Innengewinde 24a auf und ist auf ein Gegengewinde 24b auf der Kolbenstange 5 geschraubt. Damit kann die Position, an der das Einstellelement 11 und somit das Gehäuse 8 mit dem Energiespeicher 7 an der Kolbenstange 5 befestigt wird, eingestellt werden, um den Wirkbereich des Energiespeichers zu verschieben. Um das Einstellelement 11 in einer bestimmten Position zu fixieren, ist das Einstellelement 11 mit einer Kontermutter 9 oder einer Madenschraube an der Kolbenstange 5 verspannt bzw. verdrehgesichert.

Damit das Druckstück 4 auf der Kolbenstange 5 gleiten kann, befindet sich eine zentrische Bohrung 21 im Druckstück. Des Weiteren sind Gleitlager vorgesehen, um ein besseres Gleiten des Druckstücks 4 im Flansch 12 des Gehäuses 8 bzw. der Kolbenstange 5 im Druckstück 4 zu gewährleisten.

In der dargestellten Ausführungsform der Erfindung sind die Teile der Vorrichtung, wie das Gehäuse 8, das Druckstück 4, der Energiespeicher 7 und das Einstellelement 11, rotationssymmetrisch ausgebildet. Dies muss allerdings nicht zwingend so sein. Asymmetrisch ausgebildete bzw. angeordnete Teile sind ebenso möglich.

In der Fig. 1 ist die erfindungsgemäße Vorrichtung 1 im entspannten Zustand des Energiespeichers 7 dargestellt und in der Fig. 2 mit gespanntem Energiespeicher 7. Unter "entspannt" wird im Sinne der Erfindung nicht unbedingt völlig entspannt verstanden, sondern es kann auch eine Vorspannung vorhanden sein, bis zu welcher der Energiespeicher maximal entspannt werden kann, wie weiter oben beschrieben worden ist.

Das Druckstück 4 weist eine dem Zylinder 10 zugewandte Stirnfläche 15 auf und der Zylinder 10 eine dem Druckstück 4 zugewandte Gegenfläche 16. Wird die Wetterschutzhaube 19 geschlossen bzw. geöffnet, wird die Kolbenstange 5 des Dämpfers 3 in den Zylinder 10 verschoben, bis die Gegenfläche 16 auf die Stirnfläche 15 trifft. Durch die Gewichtskraft der Schutzeinrichtung wird das Druckstück 4 dann in das Gehäuse 8 geschoben und der Energiespeicher 7 gespannt.

Die erfindungsgemäße Vorrichtung wurde in Verbindung mit einem Dämpfer 3 beschrieben, weil diese Ausführungsform im Rahmen der Erfindung bevorzugt ist, insbesondere weil bei vielen Sesseln von Sesselliften ohnedies Dämpfer verwendet werden. Es ist jedoch auch möglich, dass die Gegenfläche 16 nicht an einem Zylinder 10 eines Dämpfers 3 angeordnet ist, sondern an einem beliebigen anderen Teil, der eine Gegenfläche für die Stirnfläche 15 am Druckstück 4 bildet. Anstelle der Kolbenstange 5 ist dann eine andere Form einer Führung bzw. Befestigung des Druckstücks 4 und des Einstellelements 11 vorgesehen. Auf diese Weise kann die erfindungsgemäße Vorrichtung auch ohne einen Dämpfer 3 verwendet werden. Die erfindungsgemäße Vorrichtung könnte dann auch zusätzlich zu einem Dämpfer 3 verwendet werden.

## Patentansprüche

1. Vorrichtung eines Sessels (2) für einen Sessellift, der eine verschwenkbare Schutzeinrichtung, wie einen Sicherheitsbügel (18) oder eine Wetterschutzhaube (19), aufweist, wobei die Vorrichtung (1) einen Energiespeicher (7), der zwischen der Schutzeinrichtung und einem Rahmen (17) des Sessels (2) anordenbar ist, aufweist, **dadurch gekennzeichnet, dass** der Energiespeicher (7) beim Schließen der Schutzeinrichtung erst im Bereich ihrer Endstellung von einem Druckstück (4) spannbar ist, das zwischen einer ersten Stellung, in der es von einer Gegenfläche (16) entfernt und der Energiespeicher entspannt ist, und einer zweiten Stellung, in der es an der Gegenfläche (16) anliegt und der Energiespeicher (7) gespannt ist, verschiebbar ist.

2. Vorrichtung nach Anspruch 1, **dadurch gekennzeichnet, dass** der Energiespeicher (7) ein elastisches Element, insbesondere eine Schraubenfeder, ist, welches vorzugsweise in einem Gehäuse (8) angeordnet ist.

3. Vorrichtung nach Anspruch 1, **dadurch gekennzeichnet, dass** der Energiespeicher (7) eine Gasdruckfeder oder eine Polymerfeder ist.

4. Vorrichtung nach Anspruch 3, **dadurch gekennzeichnet, dass** an einem Ende des Gehäuses (8) ein nach innen ragender Flansch (12) angeordnet ist, dass im Gehäuse (8) zwischen dem elastischen Element (7) und dem nach innen ragenden Flansch (12) wenigstens ein Abschnitt des Druckstücks (4) aufgenommen ist, das entlang einer Längsachse (25) einer Führung verschiebbar ist, dass das Druckstück (4) an einem zwischen dem elastischen Element (7) und dem nach innen ragenden Flansch (12) angeordneten Ende einen Gegenflansch (13) aufweist, und dass der Außendurchmesser des Gegenflansches (13) größer als der Innendurchmesser des nach innen ragenden Flansches (12) ist.

5. Vorrichtung nach Anspruch 4, **dadurch gekennzeichnet, dass** das Gehäuse (8) und das Druckstück (4) Rotationskörper sind.

6. Vorrichtung nach Anspruch 4 oder 5, **dadurch gekennzeichnet, dass** das Druckstück (4) eine Öffnung (21) aufweist, in der die Führung gleitet.

7. Vorrichtung nach einem der Ansprüche 4 bis 6, **dadurch gekennzeichnet, dass** die Führung am Druckstück (4) und das Druckstück (4) am nach innen ragenden Flansch (12) über Gleitlager (6) gelagert sind.

8. Vorrichtung nach einem der Ansprüche 4 bis 7, **dadurch gekennzeichnet, dass** am Gehäuse (8) ein Einstellelement (11) angeordnet ist und dass das elastische Element (7) zwischen dem Druckstück (4) und dem Einstellelement (11) eingespannt ist.

9. Vorrichtung nach Anspruch 8, **dadurch gekennzeichnet, dass** das Einstellelement (11) mit dem Gehäuse (8) an dem Ende, das dem nach innen ragenden Flansch (12) gegenüberliegt, über ein Gewinde (23a, 23b) verschraubt ist.

10. Vorrichtung nach einem der Ansprüche 4 bis 9, **dadurch gekennzeichnet, dass** das Gehäuse (8) entlang der Längsachse (25) der Führung verstellbar und fixierbar ist.

11. Vorrichtung nach einem der Ansprüche 8 bis 10, **dadurch gekennzeichnet, dass** das Einstellelement (11) eine Öffnung (22) für die Führung aufweist.

12. Vorrichtung nach Anspruch 11, **dadurch gekennzeichnet, dass** die Öffnung (22) des Einstellelements (11) ein Gewinde (24a) aufweist und mit einem Gewinde (24b) an der Führung verschraubt ist.

13. Vorrichtung nach einem der Ansprüche 1 bis 12, **gekennzeichnet durch** einen Dämpfer (3) mit einer Kolbenstange (5) und einem Zylinder (10), an dem der Energiespeicher (7) angeordnet ist.

14. Vorrichtung nach Anspruch 13, **dadurch gekennzeichnet, dass** der Energiespeicher (7) an der Kolbenstange (5) des Dämpfers befestigt ist, und dass die Kolbenstange (5) die Führung bildet.

15. Sessellift mit wenigstens zwei Stationen mit einem Einstiegs- und/oder Ausstiegsbereich, mit Sesseln (2), und mit einem Seil, an dem die Sessel (2) zwischen den Stationen fahrbar sind, **dadurch gekennzeichnet, dass** wenigstens ein Sessel (2) eine Vorrichtung nach einem der Ansprüche 1 bis 14 aufweist.

## Claims

1. Device of a chair (2) for a chairlift which has a pivotable protection means, such as a safety bar (18) or a weather protection hood (19), wherein the device (1) comprises an energy accumulator (7) which can be arranged between the protection means and a frame (17) of the chair (2), **characterized in that**, during closing of the protection means, the energy accumulator (7) can only be tensioned when the protection means is in the region of its end position by a pressure piece (4) that is movable between a first position, in which it is at a distance from a mating surface (16) and the energy accumulator is relaxed, and a second position, in which it bears against the mating surface (16) and the energy accumulator (7) is tensioned.

2. Device according to claim 1, **characterized in that** the energy accumulator (7) is an elastic element, in particular a helical spring, which is preferably arranged in a housing (8) .

3. Device according to claim 1, **characterized in that** the energy accumulator (7) is a gas pressure spring or a polymer spring.

4. Device according to claim 3, **characterized in that** an inwardly projecting flange (12) is arranged at one end of the housing (8), **in that** at least a portion of the pressure piece (4) that is movable along a longitudinal axis (25) of a guide is accommodated in the housing (8) between the elastic element (7) and the inwardly projecting flange (12), **in that** the pressure piece (4) has a mating flange (13) at an end arranged between the elastic element (7) and the inwardly projecting flange (12), and **in that** the external diameter of the mating flange (13) is larger than the internal diameter of the inwardly projecting flange (12) .

5. Device according to claim 4, **characterized in that** the housing (8) and the pressure piece (4) are bodies of revolution.

6. Device according to claim 4 or 5, **characterized in that** the pressure piece (4) has an opening (21), in which the guide slides.

7. Device according to any one of claims 4 to 6, **characterized in that** the guide is mounted on the pressure piece (4) and the pressure piece (4) is mounted on the inwardly projecting flange (12), by way of sliding bearings (6).

8. Device according to any one of claims 4 to 7, **characterized in that** an adjusting element (11) is arranged on the housing (8), and **in that** the elastic element (7) is clamped between the pressure piece (4) and the adjusting element (11) .

9. Device according to claim 8, **characterized in that** the adjusting element (11) is screwed to the housing (8) at the end opposite to the inwardly projecting flange (12), by way of a thread (23a, 23b).

10. Device according to any one of claims 4 to 9, **characterized in that** the housing (8) is movable along the longitudinal axis (25) of the guide and can be fixed in position.

11. Device according to any one of claims 8 to 10, **characterized in that** the adjusting element (11) has an opening (22) for the guide.

12. Device according to claim 11, **characterized in that** the opening (22) of the adjusting element (11) has a thread (24a) and is screwed to a thread (24b) on the guide.

13. Device according to any one of claims 1 to 12, **characterized by** a damper (3) comprising a piston rod (5) and a cylinder (10), on which the energy accumulator (7) is arranged.

14. Device according to claim 13, **characterized in that** the energy accumulator (7) is fastened to the piston rod (5) of the damper, and **in that** the piston rod (5) forms the guide.

15. Chairlift comprising at least two stations with a boarding and/or disembarking area, comprising chairs (2), and comprising a cable on which the chairs (2) can travel between the stations, **characterized in that** at least one chair (2) has a device according to any one of claims 1 to 14.

## Revendications

1. Dispositif d'un siège (2) pour un télésiège, qui présente un moyen de protection pivotant, tel qu'un arceau de sécurité (18) ou un capot de protection contre les intempéries (19), le dispositif (1) présentant un accumulateur d'énergie (7) qui peut être disposé entre le moyen de protection et un cadre (17) du siège (2), **caractérisé en ce que**, lors de la fermeture du moyen de protection, l'accumulateur d'énergie (7) ne peut être tendu que dans la zone de la position finale du moyen de protection par une pièce de pression (4) qui peut être déplacée entre une première position, dans laquelle elle est éloignée d'une contre-surface (16) et l'accumulateur d'énergie est détendu, et une deuxième position, dans laquelle elle s'appuie sur la contre-surface (16) et l'accumulateur d'énergie (7) est tendu.

2. Dispositif selon la revendication 1, **caractérisé en ce que** l'accumulateur d'énergie (7) est un élément élastique, en particulier un ressort hélicoïdal, qui est de préférence disposé dans un boîtier (8).

3. Dispositif selon la revendication 1, **caractérisé en ce que** l'accumulateur d'énergie (7) est un ressort à gaz ou un ressort en polymère.

4. Dispositif selon la revendication 3, **caractérisé en ce qu'**une bride (12) faisant saillie vers l'intérieur est disposée à une extrémité du boîtier (8), qu'au moins une partie de la pièce de pression (4) est reçue dans le boîtier (8) entre l'élément élastique (7) et la bride (12) faisant saillie vers l'intérieur, laquelle pièce de pression (4) peut être déplacée le long d'un axe longitudinal (25) d'un guide, que la pièce de pression (4) présente une contre-bride (13) à une extrémité disposée entre l'élément élastique (7) et la bride (12) faisant saillie vers l'intérieur, et que le diamètre extérieur de la contre-bride (13) est supérieur au diamètre intérieur de la bride (12) faisant saillie vers l'intérieur.

5. Dispositif selon la revendication 4, **caractérisé en ce que** le boîtier (8) et la pièce de pression (4) sont des corps de révolution.

6. Dispositif selon la revendication 4 ou 5, **caractérisé en ce que** la pièce de pression (4) présente une ouverture (21) dans laquelle coulisse le guide.

7. Dispositif selon l'une des revendications 4 à 6, **caractérisé en ce que** le guide est monté sur la pièce de pression (4) et la pièce de pression (4) est montée sur la bride (12) faisant saillie vers l'intérieur par l'intermédiaire de paliers lisses (6).

8. Dispositif selon l'une des revendications 4 à 7, **caractérisé en ce qu'**un élément de réglage (11) est disposé sur le boîtier (8) et que l'élément élastique (7) est serré entre la pièce de pression (4) et l'élément de réglage (11).

9. Dispositif selon la revendication 8, **caractérisé en ce que** l'élément de réglage (11) est vissé sur le boîtier (8) à l'extrémité opposée à la bride (12) faisant saillie vers l'intérieur au moyen d'un filetage (23a, 23b).

10. Dispositif selon l'une des revendications 4 à 9, **caractérisé en ce que** le boîtier (8) peut être réglé et fixé le long de l'axe longitudinal (25) du guide.

11. Dispositif selon l'une des revendications 8 à 10, **caractérisé en ce que** l'élément de réglage (11) présente une ouverture (22) pour le guide.

12. Dispositif selon la revendication 11, **caractérisé en ce que** l'ouverture (22) de l'élément de réglage (11) présente un filetage (24a) et est vissée sur le guide avec un filetage (24b) .

13. Dispositif selon l'une des revendications 1 à 12, **caractérisé par** un amortisseur (3) avec une tige de piston (5) et un cylindre (10) sur lequel est disposé l'accumulateur d'énergie (7).

14. Dispositif selon la revendication 13, **caractérisé en ce que** l'accumulateur d'énergie (7) est fixé à la tige de piston (5) de l'amortisseur et que la tige de piston (5) forme le guide.

15. Télésiège comportant au moins deux gares avec une zone d'embarquement et/ou de débarquement, comportant des sièges (2) et un câble sur lequel les sièges (2) peuvent être déplacés entre les gares, **caractérisé en ce qu'**au moins un siège (2) présente un dispositif selon l'une des revendications 1 à 14.
